(19) Europäisches Patentamt
European Patent Office
Office européen des brevets

(11) Veröffentlichungsnummer: **0 640 654 A1**

# (12) EUROPÄISCHE PATENTANMELDUNG

(21) Anmeldenummer: **94111827.5**

(22) Anmeldetag: **29.07.94**

(51) Int. Cl.[6]: **C08L 67/06**, C08L 63/10, C08L 75/16, C08F 290/00, C08F 283/01, //(C08L67/06, 51:08),(C08L67/06,53:00), (C08L63/10,51:08),(C08L63/10, 53:00),(C08L75/16,51:08), (C08L75/16,53:00)

(30) Priorität: **02.08.93 DE 4325886**

(43) Veröffentlichungstag der Anmeldung:
**01.03.95 Patentblatt 95/09**

(84) Benannte Vertragsstaaten:
**DE ES FR GB IT NL SE**

(71) Anmelder: **BASF Aktiengesellschaft**
**Carl-Bosch-Strasse 38**
**D-67063 Ludwigshafen (DE)**

(72) Erfinder: **Hesse, Anton, Dr.**
**Peter-Nickel-Strasse 15**
**D-69469 Weinheim (DE)**
Erfinder: **Allspach, Thomas, Dr.**
**Berliner Strasse 10**
**D-67098 Bad Duerkheim (DE)**
Erfinder: **Zwecker, Joachim, Dr.**
**Moltkestrasse 18**
**D-69469 Weinheim (DE)**

## (54) Thixotrope ungesättigte Polyesterharze.

(57) Die Erfindung betrifft thixotrope ungesättigte Polyester- und Vinylesterharz, die anorganische Thixotropiermittel sowie als Emulgatoren ein Block- oder Pfropfcopolymerisat aus einem ethylenisch ungesättigten Monomeren und einem Polyalkylenether enthalten.

Die Mischungen zeigen eine erhöhte Lagerbeständigkeit.

EP 0 640 654 A1

Die Erfindung betrifft lagerstabile thixotrope ungesättigte Polyesterharze, die einen ethylenisch ungesättigten Polyester, Styrol als Comonomeres, ein anorganisches Thixotropiermittel sowie einen Emulgator enthalten.

Bei der Herstellung von faserverstärkten Formteilen nach dem Handlaminier- oder Faserspritzverfahren ist es in vielen Fällen notwendig, daß die ungesättigten Polyesterharze ein thixotropes Fließverhalten aufweisen. Dadurch wird erreicht, daß die an senkrechten oder geneigten Formflächen aufgebrachten Schichten - z.B. Gelcoats oder Laminate - nicht abrinnen. Dank der Thixotropie sind die Harze während der Verarbeitung (durch Gießen, Pumpen, Aufstreichen, Spritzen oder Walzen) dünnflüssig, um die Glasfasern gut durchtränken zu können. Nach dem Auftragen steigt die Viskosität jedoch so stark an, daß das Harz zwischen den Glasfasern hängen bleibt und nicht abläuft.

Hauptanwendungsgebiet für Laminierharze, die 0,5 bis 1,5 % Thixotropiermittel enthalten, ist der Bootsbau, Gelcoatharze enthalten dagegen 2 bis 3 % Thixotropiermittel. Sie werden im Bootsbau, zur Herstellung von Fassadenplatten und für Innenbeschichtungen von Behältern eingesetzt. Ein weiteres Einsatzgebiet für thixotrope Harze ist die Knopfherstellung, wobei es darauf ankommt, bestimmte Farbeffekte zu erzielen.

Die bisher praktizierten Verfahren zur Einbringung des Thixotropiermittels führen häufig dazu, daß die Thixotropie der Harze beim Lagern abbaut. Es hat daher nicht an Versuchen gefehlt, diesen Mangel bei thixotropen Harzen abzustellen. Ein Zusatz von Ethylenglykol zu einem mit hochdisperser Kieselsäure thixotropierten UP-Harz erhöht die Viskosität sehr deutlich und verbessert das thixotrope Verhalten. Beim Lagern so modifizierter Harze fällt die Thixotropie jedoch stark ab. Auch durch das in der US 3 632 545 beschriebene Verfahren zur Thixotropierung ungesättigter Polyesterharze, bei welchem in die Lösung des Harzes in copolymerisierbaren Monomeren ein mit Diethylenglykol vorbehandeltes Silikat eingearbeitet wird, können diese Nachteile nicht überwunden werden. Zudem werden durch das im Polyester verbleibende polare Dispergiermittel die Beständigkeitseigenschaften daraus hergestellter Werkstücke negativ beeinflußt.

Der Erfindung lag also die Aufgabe zugrunde, thixotrope ungesättigte Polyesterharze zu entwickeln, die auch nach mehreren Wochen ihre günstigen Eigenschaften nicht verlieren, bei denen also die Thixotropieeigenschaften des Polyesterharzes auch nach längerem Lagern noch erhalten bleiben.

Diese Aufgabe wird erfindungsgemäß dadurch gelöst, daß man einem Harz, enthaltend

A. einen ungesättigten Polyester,

B. Styrol,

C. 0,05 bis 5 Gew.-% eines anorganischen Thixotropiermittels und 0,01 bis 5 Gew.-%, bezogen auf A + B, eines Block- oder Pfropfcopolymerisats aus einem ethylenisch ungesättgten Monomeren und einem Polyalkylenether als Emulgator D zusetzt.

Die Mischungen werden vorzugsweise bei Raumtemperatur mit Hilfe von schnellaufenden Rührern, Dissolvern oder Dreiwalzen hergestellt, wobei im vorgelegten styrolischen Harz (Komponenten A + B) die Komponenten C und D gleichzeitig oder in beliebiger Reihenfolge nacheinander eingebracht werden. Die erfindungsgemäßen Harze bauen umgehend eine ausgeprägte Thixotropie auf, die zudem über längere Lagerzeit stabil bleibt.

Zu den einzelnen Komponenten ist folgendes zu sagen:

A. Ungesättigte Polyester

Ungesättigte Polyester A sind die üblichen Kondensationsprodukte aus mehrwertigen, insbesondere zweiwertigen Carbonsäuren und deren veresterbaren Derivaten, insbesondere deren Anhydriden und mehrwertigen, insbesondere zweiwertigen Alkoholen, die gegebenenfalls zusätzlich Reste einwertiger Carbonsäuren, einwertiger Alkohole oder Reste von Hydroxycarbonsäuren enthalten, wobei zumindest ein Teil der Reste über ethylenisch ungesättigte copolymerisierbare Gruppen verfügen muß. Als mehrwertige, insbesondere zweiwertige, gegebenenfalls ungesättigte Alkohole eignen sich die üblichen insbesondere acyclische Gruppen, cyclische Gruppen als auch beide Arten von Gruppen aufweisende Alkandiole und Oxaalkandiole, wie z.B. Ethylenglykol, Propylenglykol-1,2, Propandiol-1,3, Butylenglykol-1,3, Butandiol-1,4, Hexandiol-1,6, 2,2-Dimethylpropandiol-1,3, Diethylenglykol, Triethylenglykol, Polyethylenglykol, Cyclohexandiol-1,2, 2,2-Bis-(p-hydrorycycloheryl)-propan, Trimethylolpropanmonoallylether oder Butendiol-1,4. Bevorzugt sind Ethylenglykol, Propylenglykol, Dipropylenglykol und deren Mischungen.

Ferner können ein-, drei- oder höherwertige Alkohole, wie z.B. Ethylhexanol, Fettalkohole, Benzylalkohole, 1,2-Di-(allyloxy)-propanol-3, Glycerin, Pentaerythrit oder Trimethylolpropan in untergeordneten Mengen mitverwendet werden. Die mehrwertigen, insbesondere zweiwertigen Alkohole werden im allgemeinen in stöchiometrischen oder annähernd stöchiometrischen Mengen mit mehrbasischen, insbesondere zweibasischen Carbonsäuren bzw. deren kondensierbaren Derivaten umgesetzt.

Geeignete Carbonsäuren bzw. deren Derivate sind zweibasische olefinisch ungesättigte, vorzugsweise $\alpha,\beta$-olefinisch ungesättigte Carbonsäuren, wie z.B. Maleinsäure, Fumarsäure, Chlormaleinsäure, Itaconsäure, Citraconsäure, Methylenglutarsäure und Mesaconsäure bzw. deren Ester oder vorzugsweise deren Anhydride. In die Polyester können weiterhin zusätzlich andere modifizierend wirkende zweibasische, ungesättigte und/oder gesättigte, sowie aromatische Carbonsäuren, wie z.B. Bernsteinsäure, Glutarsäure, $\alpha$-Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-1,2,3,6-tetrahydrophthalsäure, Endomethylentetrachlorphthalsäure oder Hexachlorendomethylentetrahydrophthalsäure einkondensiert sein, ferner ein-, drei- und höherbasische Carbonsäuren, wie z.B. Ethylhexansäure, Fettsäuren, Methacrylsäure, Propionsäure, Benzoesäure, 1,2,4-Ben-zoltricarbonsäure oder 1,2,4,5-Benzoltetracarbonsäure. Vorzugsweise verwendet werden Maleinsäure bzw. deren Anhydrid, Fumarsäure und o-Phthalsäureanhydrid.

Das Molverhältnis von ungesättigten zu gesättigten Dicarbonsäuren liegt vorzugsweise zwischen 1:0 und 1:2,5.

Gemische ungesättigter Polyester, darunter auch solche, die in Styrol nur beschränkt löslich sind und leicht kristallisieren, können ebenfalls vorteilhaft eingesetzt werden. Solche leicht kristallisierenden ungesättigten Polyester können z.B. aus Fumarsäure, Adipinsäure, Terephthalsäure, Ethylenglykol, Butandiol-1,4, xexandiol-1,6 und Neopentylglykol aufgebaut sein.

Geeignet sind auch ungesättigte Polyester mit vorzugsweise endständigen Doppelbindungen.

Die ungesättigten Polyester besitzen Säurezahlen von 0,5 bis 100, vorzugsweise von 2 bis 50 und mittlere Molekulargewichte von ungefähr 800 bis 6000, vorzugsweise von etwa 1000 bis 4000.

Die amorphen und gegebenenfalls kristallisierbaren ungesättigten Polyester werden im allgemeinen durch Schmelzkondensation oder Kondensation unter azeotropen Bedingungen bei Temperaturen zwischen 150 und 220 °C aus ihren Ausgangskomponenten nach kontinuierlichen oder diskontinuierlichen Verfahren hergestellt.

Ebenfalls geeignet sind ungesättigte Polyester, die mit Cyclopenten- oder Cyclohexengruppen modifiziert sind.

Von dem Begriff ungesättigte Polyester im Sinne der Erfindung sind auch Vinylester mit umfaßt.

Unter Vinylestern versteht man gemeinhin Umsetzungsprodukte von Polyepoxiden mit ungesättigten Monocarbonsäuren, vorzugs-weise Methacrylsäure. Auch diese Produkte werden in ungesättigten Monomeren, vorzugsweise Styrol, gelöst. Diese Harze werden beispielsweise in den US-PS 3 066 112 und 3 179 623 beschrieben, wobei bevorzugt Vinylesterharze auf Basis von Bisphenol A zur Anwendung kommen. Sie zeichnen sich durch hohe Zähigkeit und gute Chemikalienbeständigkeit bei begrenzter Wärmeformbeständigkeit aus. Vinylesterharze aus Epoxy-Novolakharzen und (Meth-)Acrylsäure, wie sie beispielsweise in der US-PS 3 256 226 beschrieben werden, weisen dagegen höhere Wärmeformbeständigkeiten, aber geringere Zähigkeiten auf.

Kennzeichnend für die Klasse der Vinylesterharze ist die Gruppe

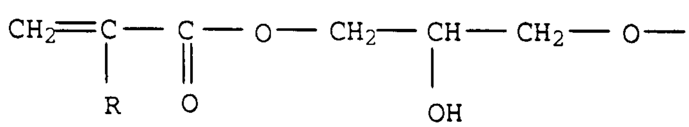

mit R = H oder $CH_3$.

Schließlich sind auch Vinylesterurethane als ungesättigte Polyester geeignet. Sie weisen im allgemeinen folgende Gruppen auf:

a)

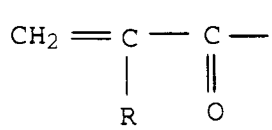

(mit R = H oder $CH_3$).

b)

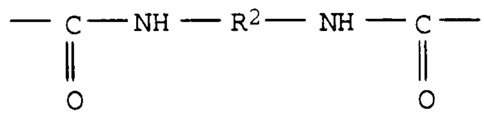

(mit $R^2$ = zweiwertiger aliphatischer, aromatischer oder cycloaliphatischer Rest mit 4 bis 40 C-Atomen, vorzugsweise ein aromatischer Rest mit 6 bis 20 C-Atomen), gegebenenfalls

c) - O - $R^3$ - O -

(mit $R^4$ = aliphatischer, cycloaliphatischer oder aromatischer Rest mit 2 bis 100 C-Atomen).

Vorzugsweise ist das Vinylesterurethan ein Umsetzungsprodukt aus

- einem polyfunktionellen Isocyanat,
- gegebenenfalls einem mehrwertigen Alkohol,
- gegebenenfalls einem mehrwertigen Amin,
- einem Hydroxyalkyl- (meth) acrylat,

wobei bei der Umsetzung das Gewichtsverhältnis Isocyanat: (Alkohol + Amin) zwischen 100:0 und 100:300 beträgt und das Aquivalentverhältnis Hydroxyalkyl(meth)acrylat zu den freien Isocyanatgruppen des Umsetzungsproduktes zwischen 3:1 und 1:2 liegt.

B. Monomere

Die ungesättigten Polyesterharze enthalten als Monomeres Styrol. Das Verhältnis Polyester:Styrol liegt dabei vorzugsweise zwischen 20:80 und 90:10, insbesondere zwischen 50:50 und 75:25. Styrol als Comonomeres kann teilweise durch andere übliche ethylenisch polymerisierbare Monomere ersetzt werden, z.B. Vinylverbindungen, wie substituierte Styrole, Ester der Acryl- und Methacrylsäure oder Allylverbindungen, wie Diallylphthalat.

C. Als Thixotropiermittel ist hochdisperse Kieselsäure bevorzugt, vorzugsweise mit einer Primärteilchengröße von 1 bis 100 nm. Daneben sind auch Aluminiumoxid und Bentonit sowie deren Mischungen mit Kieselsäure geeignet. Die Komponente C ist im Harz in Mengen von 0,05 bis 5 Gew.-%, insbesondere von 0,5 bis 3 Gew.-%, bezogen auf A + B, enthalten.

D. Das Harz enthält erfindungsgemäß als Emulgator 0,01 bis 5, vorzugsweise 0,1 bis 2 Gew.-% eines Block- oder Pfropfcopolymerisats aus einem ethylenisch ungesättigten Monomeren und einem Polyalkylenether. Derartige Copolymerisate werden zweckmäßigerweise hergestellt durch Polymerisation von 99 bis 60 Gew.-% eines Monomeren in Gegenwart von 1 bis 40 Gew.-% eines Polyalkylenethers mit einem Molekulargewicht von 500 bis 50.000, insbesondere von 2.000 bis 40.000. Dabei muß nicht unbedingt eine vollständige Anbindung der wachsenden Polymerkette an den Polyalkylenether erfolgen, d.h., es können auch Mischungen entstehen aus Block- bzw. Pfropfcopolymerisat einerseits und untergeordneten Mengen an unverändertem Polyalkylenether und Homopolymerisat des ethylenisch ungesättigten Monomeren andererseits. Die Block- bzw. Pfropfcopolymerisate haben bevorzugt HLB-Werte zwischen 0,1 und 1,5.

Bevorzugte Polyalkylenether sind z.B. Polyethylenoxid, Polypropylenoxid, sowie Copolymere aus Ethylenoxid und Propylenoxid. Zur Copolymerisation mit den Monomeren können die Polyalkylenether als solche eingesetzt werden oder Polyalkylenether, die ungesättigte Gruppen enthalten. Letztere können entweder dadurch erhalten werden, daß man bei der Herstellung des Polyalkylenethers ungesättigte Epoxide zusetzt oder daß man die Hydroxylendgruppen des Polyalkylenethers mit organischen Verbindungen, die sowohl eine ungesättigte Doppelbindung als auch eine reaktive Gruppe enthalten, umsetzt. Beispiele sind ungesättigte Carbonsäuren und deren Derivate, wie Acrylsäure, Methacrylsäure, Maleinsäureanhydrid, Bernsteinsäureanhydrid, ferner hydroxylgruppenhaltige ungesättigte Carbonsäureester im Gemisch mit Diisocyanaten. Die gesättigten oder ungesättigten Polyalkylenether werden auf übliche Weise mit ethylenisch ungesättigten Monomeren in Gegenwart von radikalischen Initiatoren bei erhöhten Temperaturen block- bzw. pfropfcopolymerisiert. Bevorzugte Monomere sind Styrol, Acrylate und Methacrylate sowie Mischungen davon. Weitere Einzelheiten über Herstellung und Struktur der Polyalkylenethercopolymerisate finden sich in der DE-C 26 57 808.

Neben den Komponenten C und D können die erfindungsgemäßen Harze noch weitere übliche Zusatzstoffe enthalten, wie Verstärkungsfasern, z.B. Glas- und Kohlenstoff-Fasern; Füllstoffe, z.B. Kreide, Quarz, Aluminiumoxidhydrat; Inhibitoren, z.B. Hydrochinon; Polyfunktionelle Hydroxylverbindungen, z.B. Ethylenglykol, Trimethylolpropan; Gleitmittel wie z.B. Stearate; Flammschutzmittel, insbesondere Halogenverbindungen; Härtungsbeschleuniger, z.B. Cobaltkomplexe oder aromatische Amine; Photoinitiatoren, wie Benzoinether, Benzilketale oder Acylphosphinoxide.

Die Einarbeitung der Komponenten C und D sowie gegebenenfalls weiterer Zusatzstoffe erfolgt durch Einrühren, vorzugsweise mit hochtourigen Rührern, wobei die Zusätze, soweit möglich, in Styrol gelöst sind. Die bevorzugten kalthärtenden ungesättigten Polyesterharze enthalten 0,01 bis 0,5 Gew.-% eines Cobalt- oder Aminbeschleunigers; die erforderlichen Peroxide, z.B. Methylethylketonperoxid oder Benzoylperoxid, werden dem Harz erst kurz vor der Härtung zugesetzt. Lichthärtbare Harze enthalten 0,05 bis 3 Gew.-% üblicher Photoinitiatoren.

Die erfindungsgemäßen thixotropen ungesättigten Polyesterharze werden bevorzugt dort eingesetzt, wo sie auf senkrechte oder geneigte Flächen aufgebracht werden sollen, z.B. bei der Herstellung von GFK-Formteilen durch Handlaminieren, Spritzen, Gießen oder Streichen.

Die in den Beispielen genannten Teile und Prozente beziehen sich auf das Gewicht.

Beispiele

UP-Harze A

A 1

Ein ungesättigter Polyester mit Säurezahl 30 wurde hergestellt durch Schmelzekondensation aus Maleinsäureanhydrid, o-Phthalsäureanhydrid, Propylenglykol und Ethylenglykol im Molverhältnis 1:0,5:0,8:0,75. Der ungesättigte Polyester wurde 67 %ig in Styrol gelöst und mit 100 ppm Hydrochinon stabilisiert.

A 2

Ein ungesättigter Polyester mit Säurezahl 32 und Schmelzviskosität 890 mP•s (bei 150 °C gemessen) wurde durch Kondensation von Maleinsäureanhydrid, o-Phthalsäureanhydrid, Propylenglykol und Dipropylenglykol im Molverhältnis 1:0,2:0,95:0,3 hergestellt. Das Produkt enthielt zur Stabilisierung 200 ppm Hydrochinon und 1000 ppm Triphenylphosphit.

Thixotropiermittel C

C 1

Hochdisperse Kieselsäure (Aerosil 200, Fa. Degussa), hergestellt durch Flammenhydrolyse aus Siliziumtetrachlorid.

C 2

Mischung aus Aluminiumoxid C (16 %) und hochdisperse Kieselsäure Aerosil 200 (84 %); das Produkt hat die Handelsbezeichnung Aerosil COK 84 (Fa. Degussa).

Polyalkylenethercopolymerisat D

97,3 Teile eines difunktionellen Polyethylenglykols vom Molekulargewicht 9000, 44,5 Teile Toluol, 0,97 Teile Maleinsäureanhydrid und 1,05 Teile Bernsteinsäureanhydrid wurden unter Rühren in Stickstoffatmosphäre aufgeschmolzen und 1 Stunde bei 130 °C gehalten. In zwei getrennten Zuläufen wurden eine Lösung von 8,9 Teilen Benzoylperoxid in 41,3 Teilen Toluol innerhalb von 2 Stunden und 475,2 Teile Styrol innerhalb von 1 Stunde zudosiert. Nach weiteren 2 Stunden bei 130 °C resultierte eine viskose Dispersion, die zunächst mit 2 Teilen Ameisensäure 15 Minuten gerührt, auf 120 °C abgekühlt, mit 0,17 Teilen Hydrochinon versetzt und schließlich mit 825 Teilen Styrol aufgenommen wurde. Es entstand eine trübe Mischung mit einer Viskosität (23 °C) von 280 (mPa•s) und einem Trockengehalt von 36,5 %.

Beispiele 1 und 2

Zur Prüfung der Lagerfähigkeit thixotroper Harze wurde ihre Viskosität mit einem Rotationsviskosimeter vor und nach Lagerung bei zwei unterschiedlichen Umdrehungsgeschwindigkeiten der Spindel gemessen. Die Ergebnisse sind in Tabelle 1 zusammengefaßt. Die erfindungsgemäßen Harze mit einem Gehalt an Polyalkylenetherpfropfpolymerisat D weisen bei 0,5 Umdrehungen pro Minute (Upm) sehr hohe Werte der

Viskosität auf, die bei größerer Schergeschwindigkeit (10 Upm) stark abfallen, ein Charakteristikum für thixotrope Harze. Dieser Effekt läßt sich durch einen Thixotropieindex beschreiben, den wir aus folgender mathematischer Beziehung ableiten:

$$\text{Thixotropieindex} = \frac{\eta_{23^\circ C}\ (0{,}5\ \text{Upm})}{\eta_{23^\circ C}\ (10\ \text{Upm})} \cdot 2$$

Es zeigt sich, daß der Thixotropieindex bei den erf indungsgemäßen Harzen während einer 4wöchigen Lagerzeit kaum abfällt, die Thixotropie also nicht abbaut. Dabei läßt sich die Konzentration an Thixotropiermittel deutlich senken, ohne Einbußen beim rheologischen Verhalten hinnehmen zu müssen (Beispiel 2).

Die Vergleichsbeispiele zeigen auf der anderen Seite, daß UP-Harz A 1 ohne die erfindungsgemäße Komponente D 1 keine Thixotropie aufbaut und ein Ethylenglykolzusatz einen nur zeitlich begrenzten Erfolg bringt. Innerhalb 4wöchiger Lagerung fällt auch hier der Thixotropieindex dramatisch ab.

Tabelle 1

| Lagerstabilität thixotroper UP-Harze | | | | | |
|---|---|---|---|---|---|
| | | Bsp. 1 | Bsp. 2 | Vergleich | Vergleich |
| UP-Harz A 1 (Teile) | | 100 | 100 | 100 | 100 |
| Styrol (Teile) | | 10 | 10 | 10 | 10 |
| Komponente C 1 (Teile) | | 1,2 | 0,9 | 1,2 | 1,2 |
| Komponente D (Teile) | | 0,2 | 0,7 | - | - |
| Ethylenglykol (Teile) | | - | - | - | 0,2 |
| Viskositat (23 °C) (mPa•s) | | | | | |
| bei 0,5 Upm | sofort | 14300 | 12700 | 800 | 8000 |
| | nach 4 Wochen | 10000 | 11000 | - | 800 |
| bei 10 Upm | sofort | 1480 | 1490 | 840 | 1300 |
| | nach 4 Wochen | 1190 | 1380 | - | 840 |
| Thixotropieindex | | | | | |
| sofort | | 4,8 | 4,3 | 0,5 | 3,0 |
| nach 4 Wochen | | 4,2 | 4,0 | - | 0,5 |

Beispiel 3

Herstellung eines glasfaserverstärkten Formteils

Es wurde eine Harzmischung hergestellt aus:
100 Teilen UP-Harz A 1
0,9 Teilen Thixotropiermittel C 1
0,7 Teilen Komponente D
1,0 Teilen Methylethylketonperoxid MEKP HA 2
0,4 Teilen Co-Beschleuniger (1 %ig an $Co^{2+}$)

Mit dem katalysierten Harz wurden vier Lagen Glasfasermatten (M 123, Fa. Gevetex, 450 g/m$^2$) mit Hilfe einer Riffelwalze übereinanderlaminiert. Die Faserbenetzung war sehr gut, die Transparenz ausgezeichnet. Nach der Härtung entstand ein plattenförmiger Formstoff mit einem Glasfasergehalt von 33 % und den Abmessungen 400 x 300 x 4 mm. Nach 24stündiger Temperung bei 80 °C wurden Probekörper zur Bestimmung mechanischer Kennwerte ausgearbeitet.

Tabelle 2

| Formstoffeigenschaft | Wert | Prüfmethode |
|---|---|---|
| Biegefestigkeit [MPa] | 190 | DIN 53 452 |
| Biege-E-Modul | 7500 | DIN 53 457 |
| Barcolhärte | 45 - 55 | |

Beispiel 4

Stabilisierung einer UP-Harz/Polyethylendispersion

a) Herstellung einer Dispersion
In einem beheizbaren Rührgefäß mit Ankerrührer wurden 390 Teile UP-Harz A 2 auf 170 °C erwärmt, mit 16 Teilen eines durch Polyinerisation im Hochdruckautoklav bei 1500 bar und 240 °C hergestellten Polyethylenwachses aus 87,5 % Ethylen und 12,5 % Dimethylaminoethylacrylat versetzt und 5 Minuten später bei einer Rührgeschwindigkeit von 75 Umdrehungen pro Minute mit 202 Teilen Polyethylen (Dichte 0,924 [g/cm$^2$], Schmelzindex MFI (190/2,16) : 36 [g/10 min]) in vier Portionen. Die Polyethylenzugabe dauerte 40 Minuten. Es wurde 40 Minuten weitergerührt, auf 150 °C abgekühlt und 2 Stunden unter Rühren gehalten. Nach Abkühlung auf 135 °C wurde die Schmelze innerhalb von 30 Minuten in ein Rührgefäß abgelassen, in dem 380 Teile Styrol und 0,3 Teile 2,6-Dimethylchinon bei 50 °C gerührt wurden. Es entstand eine Dispersion von Polyethylenpartikeln in UP-Harz, die nach Abkühlung auf 25 °C mit 0,15 % Komponente C 2 versetzt wurde (Vergleichsprobe).
b) Zur Prüfung der erfindungsgemäßen Zusätze, wurden
100 Teile Vergleichsprobe und
3,0 Teile Komponente D
mit einem Rührwerk vermischt und parallel zur Vergleichsprobe styroldicht verschlossen im Dunkeln gelagert. Bereits nach 7 Tagen separierte am Boden der Vergleichsprobe eine klare Phase, die sich im Verlauf einer 2monatigen Lagerzeit so verstärkte, daß sie ca. 30 % der gesamten Harzschicht ausmachte. Unter diesen Lagerbedingungen zeigte die erfindungsgemäße Harzmischung mit der Komponente D nicht die geringste Phasenseparation, sie blieb homogen und fließfähig. Deshalb ist nur die erfindungsgemäße Dispersion aufgrund ausreichender Lagerfähigkeit technisch sicher nutzbar.

## Patentansprüche

**1.** Thioxotrope ungesättigte Polyesterharze, enthaltend
A. einen ungesättigten Polyester,
B. Styrol
C. 0,05 bis 5 Gew.-%, bezogen auf A + B, eines Thixotropiermittels,
D. 0,01 bis 5 Gew.-%, bezogen auf A + B, eines Emulgators,
dadurch gekennzeichnet, daß die Komponente D ein Block- oder Pfropfcopolymerisat aus einem ethylenisch ungesättigten Monomeren und einem Polyalkylenether ist.

**2.** Polyesterharze nach Anspruch 1, dadurch gekennzeichnet, daß die Komponente C hochdisperse Kieselsäure mit einer Primärteilchengröße von 1 bis 100 nm ist.

**3.** Polyesterharz nach Anspruch 1, dadurch gekennzeichnet, daß die Komponente D durch Polymerisation von 99 bis 60 Gew.-% eines ethylenisch ungesättigten Monomeren, vorzugsweise von Styrol oder eines Acrylesters, in Gegenwart von 1 bis 40 Gew.-% eines Polyalkylenethers mit einem Molekulargewicht zwischen 500 und 50.000 hergestellt wurde.

**4.** Kalthärtendes Polyesterharz nach Anspruch 1, dadurch gekennzeichnet, daß es 0,01 bis 0,5 Gew.-%, bezogen auf A + B eines üblichen Cobalt- oder Amin-Beschleunigers enthält.

**5.** Kalthärtendes Polyesterharz nach Anspruch 1, dadurch gekennzeichnet, daß es 0,05 bis 3 Gew.-% eines Photoinitiators enthält.

**6.** Verwendung der Polyesterharze nach Anspruch 1 zur Herstellung von GFK-Formteilen durch Handlaminieren, Spritzen, Gießen oder Streichen.

Europäisches Patentamt

# EUROPÄISCHER RECHERCHENBERICHT

Nummer der Anmeldung
EP 94 11 1827

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EP-A-0 369 683 (THE DOW CHEMICAL CO.)<br>* Zusammenfassung; Anspruch 10 *<br>* Seite 2, Zeile 34 - Zeile 38 *<br>* Seite 4, Zeile 36 - Zeile 41 *<br>* Seite 5, Zeile 31 - Seite 6, Zeile 10 *<br>* Beispiel 9 *<br>--- | 1,3,4,6 | C08L67/06<br>C08L63/10<br>C08L75/16<br>C08F290/00<br>C08F283/01<br>//(C08L67/06, 51:08), (C08L67/06, 53:00), (C08L63/10, 51:08), (C08L63/10, 53:00), (C08L75/16, 51:08), (C08L75/16, 53:00) |
| Y | DATABASE WPI<br>Week 7230,<br>Derwent Publications Ltd., London, GB;<br>AN 72-47290T<br>& JP-B-47 026 855 (NIPPON GAKKI CORP. LTD.) 19. Juli 1972<br>* Zusammenfassung *<br>& CHEMICAL ABSTRACTS, vol. 78, no. 4, 29. Januar 1973, Columbus, Ohio, US; abstract no. 17757,<br>* Zusammenfassung *<br>--- | 1,3,4,6 | |
| A | EP-A-0 092 098 (BASF AG)<br>* Anspruch 1 *<br>* Seite 3, Zeile 23 - Seite 4, Zeile 2 *<br>* Seite 6, Zeile 24 - Seite 11, Zeile 32 *<br>* Seite 13, Zeile 1 - Seite 15, Zeile 11 *<br>--- | 1,3-6 | **RECHERCHIERTE SACHGEBIETE (Int.Cl.6)**<br>C08L<br>C09D<br>C08F<br>C08K |
| A | FR-A-2 216 317 (THE DOW CHEMICAL CO.)<br>* Ansprüche 1,5,6 *<br>* Seite 2, Zeile 8 - Seite 4, Zeile 19 *<br>* Seite 7, Zeile 16 - Seite 10, Zeile 3 *<br>--- | 1,3,4 | |
| A | DATABASE WPI<br>Week 7734,<br>Derwent Publications Ltd., London, GB;<br>AN 77-60193Y<br>& JP-A-52 082 938 (KURARAY KK) 11. Juli 1977<br>* Zusammenfassung *<br>---<br>-/-- | 1 | |

Der vorliegende Recherchenbericht wurde für alle Patentansprüche erstellt

| Recherchenort | Abschlußdatum der Recherche | Prüfer |
|---|---|---|
| BERLIN | 14. November 1994 | Krische, D |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 94 11 1827

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DATABASE WPI<br>Week 8341,<br>Derwent Publications Ltd., London, GB;<br>AN 83-786748<br>& JP-A-58 149 951 (NIPPON SHOKUBAI KAGAKU)<br>6. September 1983<br>* Zusammenfassung *<br>--- | 1 | |
| A | EP-A-0 518 122 (BASF AG)<br>* Ansprüche 1-7 *<br>* Seite 12, Zeile 33 - Zeile 46 *<br>--- | 1 | |
| A | W. WOEBCKEN 'kunststoff-handbuch, band 10, duroplaste'<br>1988 , CARL HANSER VERLAG , MüNCHEN<br>* Seite 177, Absatz 2 *<br>----- | 2 | |
| | | | RECHERCHIERTE SACHGEBIETE (Int.Cl.6) |

Der vorliegende Recherchenbericht wurde für alle Patentansprüche erstellt

| Recherchenort | Abschlußdatum der Recherche | Prüfer |
|---|---|---|
| BERLIN | 14. November 1994 | Krische, D |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument